# EUROPÄISCHE PATENTSCHRIFT

(11) **EP 0 835 608 B1**
(45) Veröffentlichungstag und Bekanntmachung des Hinweises auf die Patenterteilung: **12.12.2001**
(21) Anmeldenummer: 97117303.4
(22) Anmeldetag: 07.10.1997
(51) Int. Cl.: A22C 11/08, A22C 11/00

(54) **Zerkleinerungs- und Emulgierautomat**
Automatic apparatus for cutting and emulsification
Appareil automatique de coupe et d'émulsification

(30) Priorität: 12.10.1996 DE 19642232
(43) Veröffentlichungstag der Anmeldung: 15.04.1998
(73) Patentinhaber: Maschinenfabrik Dornhan GmbH, 72173 Dornhan (DE)
(72) Erfinder: Mössmer, Michael, 72291 Betzweiler-Wälde (DE); Haack, Eberhard, Dr., 06108 Halle (DE)
(74) Vertreter: Leinung, Günter

(56) Entgegenhaltungen:
- EP-A- 0 247 342
- EP-A- 0 491 157
- WO-A-96/29878
- DE-A- 3 202 588
- DE-A- 3 542 671
- DE-B- 1 132 464
- FR-A- 2 335 256
- FR-E- 77 757

## Beschreibung

Die Erfindung betrifft einen Zerkleinerungs- und Emulgierautomaten zum Herstellen von Wurstbrät für Rohwurst- Dauerware, Kochwurst, Brühwurst oder dergleichen mit einer wählbaren Körnung des Wurstbrätes aus grobstückig chargiertem Fleisch in die jeweilige Brätart des Endproduktes.

Bei der Herstellung von Wursterzeugnissen werden in bekannter Weise die Rohstoffe, das Fleisch und die weiteren Zutaten, in Zerkleinerungsmaschinen, die vorrangig nach dem Wolfprinzip arbeiten, zerkleinert. Je nach Ausrüstung und Notwendigkeit erfolgt eine Grob-und/oder Feinzerkleinerung der Rohstoffe, dem sich technologisch bedingt eine Feinstzerkleinerung anschließen kann, die dann vorrangig in Kuttern abläuft.

Sowohl die bekannten Maschinen zur Wurstherstellung, Fleischwölfe und Kutter siehe z.B. DE-A-3542671 und WO 96/29878, als auch die einzelnen Verfahrensschritte sind immer in Abhängigkeit vom herzustellenden Endprodukt gestaltet und den technologischen Prozeßabläufen untergeordnet, wobei die technischen Einrichtungen die technologischen Verfahrensabläufe beeinflussen. Das Zusammenspiel zwischen den technologischen Verfahrensschritten und den konstruktiven Ausführungen der Fleischereimaschinen bestimmen sowohl das Endprodukt als auch die Effektivität und Leistungsfähigkeit der jeweiligen Maschine.

Das erste Wirkprinzip ist durch die Förderung und Zerkleinerung des/der Rohstoffe gekennzeichnet und betrifft unmittelbar den Wolfprozeß mit seinen Teilbereichen der Förderung/Zerkleinerung und wird durch die Wolftechnik selbst charakterisiert. Dies bedeutet, daß über die Fördersysteme, den Förderschnecken, das Wolfgut transportiert und verdichtet wird und in diesem Zustand auf ein Schneidsystem gelangt, welches die Zerkleinerung auf Übergabebedingungen bewirkt.

Prinzipiell kann bei fast allen Wolfmaschinen von einer Reibungsförderung, bezogen auf das Transportieren, gesprochen werden und vom Prinzip des Einspannens und Abschneidens des Wolfgutes.

Das zweite Wirkprinzip betrifft die Feinstzerkleinerung, die vorrangig in Kuttern, sogenannten Schüsselkuttern abläuft, welche mit hochtourigen, feinschneidenden Messern ausgerüstet sind. Diese hochtourigen Schüsselkutter nutzen dabei die Massenträgheit der eingefüllten Rohstoffpartikel für den Schneid- und Zerkleinerungsprozeß. Außerdem wird der Rohstoff im Kutter emulgiert und vermischt.

Die Mengtechnik zur Rohstoffvermischung bzw. das Untermischen von Gewürzen und anderen Zutaten, stellt das dritte Wirkprinzip dar.

Hierzu sind einzelne Mengaggregate bekannt. Allerdings können auch die genannten Schüsselkutter, wie auch Fleischwölfe, als Mengorgane benutzt werden. Das bedeutet, daß unmittelbar in den Wolf- oder Kutterprozeß die Zusatzstoffe eingegeben und mit dem zu zerkleinernden Rohstoff gemengt werden.

Als viertes Wirkprinzip ist das Abfüllen des hergestellten Wurstbrätes zu nennen. Die Fülltechnik ist dabei so ausgeführt, daß das hergestellte Wurstbrät dann üblicherweise in einen Vorratstrichter einer Wurstfüllmaschine gefüllt, mittels einer Zubringereinrichtung einer Förderpumpe zugeführt und von dieser unter Druck durch ein Füllrohr hindurch in den Wurstdarm abgegeben wird, wobei der Wurstdarm auf dem Füllrohr aufgerafft und von der Wurstmasse nach und nach abgezogen wird.

Das Portionieren der nun gefüllten Wurst wird über die Fahrweise der Füllmaschine gesteuert, indem die Förderung des Wurstbrätes üblicherweise unterbrochen wird. Zwischen zwei Fördertakten wird der Darm maschinell oder manuell abgedreht oder durch Clippen in die einzelnen Würste unterteilt.

Bei Fleischwölfen und bei nach dem Wolfprinzip arbeitenden Zerkleinerungsmaschinen wird das zu wolfende Verarbeitungsgut über geeignete Aufgabeeinrichtungen, vorzugsweise Einfülltrichter, in die Maschine gegeben und durch die im Druckgehäuse oder Druckrohr gelagerte Druck- und Förderschnecke zum Schneidsatz gefördert. Dabei haben die Druck- und Förderschnecken sowie das Druckrohr des Fleischwolfes die Aufgabe, das Wolfgut zu stützen, zu fördern und bis zu einem bestimmten Grade zu komprimieren d. h. zu pressen.

Dies wird erreicht, indem die Druck- und Förderschnecken mit bestimmten geometrischen Formen und Steigungen versehen werden und zusätzliche Elemente, sogenannte Spaltkeile, diesen Effekt noch günstiger beeinflussen.

Die Zerkleinerungsmaschinen für die Feinstzerkleinerung, die bereits genannten Schüsselkutter, sind dabei vorrangig in waagerechter Form ausgeführt und drehend um ihre eigene Achse gelagert. In den schüsselförmigen Behältern greifen die Zerkleinerungselemente ein. Dies sind schnellaufende, sichelförmige Messer, die eine entsprechende Feinstzerkleinerung bewirken. Dies kann auch unter Vakuum erfolgen. Andere Feinstzerkleinerungsaggregate arbeiten mit hochtourigem Mahl- Schneid- oder Messersätzen, immer mit der Zielstellung, feinen Rohstoff gleichmäßig noch feiner zu erhalten.

Alle bisher bekannten Verfahren und Maschinen zur Wurstbrätherstellung laufen nach diesen Prinzipien ab und sind demgemäß entsprechend konstruktiv gestaltet. Aus diesen Darlegungen ergibt sich, daß die bekannten technologischen Abläufe zur Herstellung von Wurst sehr aufwendig sind, denn immer wird ein Transport und Aufgeben des jeweiligen Zwischenproduktes zur nächsten Verfahrensstufe und nächsten Bearbeitungsmaschine erforderlich.

Aufgabe der vorliegenden Erfindung ist es, einen Zerkleinerungs- und Emulgierautomaten zur Herstellung des Wurstbrätes für Brühwurst, Rohwurst-Dauerware, Kochwurst und dergleichen zu entwickeln, mit dem gesichert wird, daß mit dem Scherprinzip und den langsamlaufenden Zerkleinerungsparametern der Wolftechnik großstückige Fleischteile aus einem offenen drucklosen Trichtersystem entnommen werden können, diese sodann mehrfach zu fördern, zu zerkleinern und nach Bedarf mehrfach umlaufen zu lassen, wobei die Prozeßparameter der stofflichen Änderung des Rohstoffes anzupassen sind und ein Endprodukt in Wurstbrätkonsistenz bereitzustellen ist.

Die Aufgabe der Erfindung wird durch die kennzeichnenden Merkmale des Anspruches 1 gelöst.

Vorteilhafte Ausführungen und zweckmäßige Ausgestaltungen der Erfindung sind Gegenstand der Unteransprüche.

Erfindungsgemäß wird die Aufgabe durch einen Zerkleinerungs- und Emulgierautomaten gelöst, mit dem die einzelnen Verfahrensschritte zur Herstellung eines Wurstbrätes, von der Zuförderung zur Grobzerkleinerung bis zum Abfüllen des Wurstbrätes in entsprechende Därme, nach technologischen und verfahrensbedingten Folgen in einer Maschine realisiert werden.

Das Verfahren wird dadurch gestützt, daß mehrere Förder- und Schneidsysteme gleichzeitig, aber in der Folge nacheinander ablaufen, wobei die Verfahrensschritte so gestaltet und aufeinander abgestimmt sind, daß sie in der gewünschten Reihenfolge auf den zu bearbeitenden Rohstoff einwirken und gleichfalls mit den in den Rohstoffen stattfindenden Umwandlungen kommunizieren.

Das Zubringen des Wolfgutes, die Zuförderung zum Zerkleinern, beginnt mit der Rohstoffaufnahme in einem offenen Behälter, in dem der Rohstoff drucklos vorliegt und aus diesem über Förderschnecken aus dem Behälter herausgeführt wird. Die Rohstoffteile sind dabei großstückig ausgeführt und besitzen Gewichtswerte von mehreren Kilogramm. Über diese Förderschnecken werden die Rohstoffe der ersten Zerkleinerungsstufe oder dem ersten Zerkleinerungsprozeß zugeführt und auf eine Stückigkeit von 50 bis 200 g zerkleinert.

Dabei erfolgt die Zerkleinerung durch Schneidsatzteile, die den Förderschnecken des Zubringersystems zugeordnet sind und somit direkt mit diesen in Wirkverbindung stehen.

Dieser Systemstufe kommt also die Aufgabe zu, den Rohstoff in seiner Stückigkeit für den nachfolgenden Hochdruckförderprozeß aufzubereiten, welches unmittelbar in den entsprechenden Fördereinrichtungen erfolgt. Als Unterstützung zur Rohstoffübergabe erfolgt der Aufbau eines Vakuums als Einzugshilfe für die in dem nachfolgenden Verfahrensschritt eingesetzten Hochdruckförderelemente. Diese können als Verdrängerschnecken mit verschiedener Steigung ausgebildet sein.

Dieser Verfahrensschritt der Hochdruckförderung läuft in einem sehr dichten System ab, mit dem jedoch keine Rohstoffquetschung, sondern eine portionierte Förderung statt findet. Dies wird dadurch gesichert, daß durch die Befüllung von sogenannten Förderzellen diese den Rohstoff aufnehmen als auch abgeben und erst durch die Mengenförderung bei hoher Dichtheit den erforderlichen Hochdruck bei Werten von 10 bis 50 bar in einem freien Raum aufbauen. Aus diesem Hochdruckbereich tritt der Rohstoff auf ein oder zwei nachgeschaltete Schneidsysteme, die durch räumliche Abstände getrennt sind. Zwischen den Schneidsystemen befindet sich eine Meng-Mischarmatur zur Rohstoffumordnung aus seiner Förderlage in seine Fertigproduktposition.

Beim Einsatz von zwei bzw. drei Schneidsystemen kommt dem ersten Schneidsystem die Aufgabe zu, den Rohstoff entsprechend den Zielbedingungen vorzuzerkleinern, das zweite Schneid- system bewirkt eine weitere Zerkleinerung des Gutes, während das dritte Schneidsystem eine Zerkleinerung bis auf die Endkörnung des Fertigproduktes vornimmt, so daß dieses Wurstbrät unmittelbar nach diesem Feinstzerkleinerungsprozeß abgefüllt werden kann. Die Zugabe von Wasser und Würzstoffen läuft dosiert im Bereich einer Misch- und Mengarmatur in einem gesonderten Mengraum unter Einwirkung von Hochdruck ab, wodurch erforderliche stoffliche Konsistenz und Verteilung innerhalb des Fertigproduktes qualitätsgerecht sichergestellt wird.

Die Verfahrensführung des Automaten gestattet, daß diese Prozesse, vorrangig die Feinstzerkleinerung des Rohstoffes, durch das zweite und dritte Schneidsystem in wiederholter Folge ablaufen können und so auch subjektive Kontroll- und Eingriffsmöglichkeiten sichern kann.

Das gesamte System selbst wird prozeßgesteuert, die Produktdaten des zu zerkleinernden Gutes werden nach dem zweiten Schneidsystem über entsprechende Zähleinrichtungen abgeleitet und zur Regelung und Steuerung des Automaten als auch für die Zudosierung der Beimengungen genutzt.

Den Ablauf der vorbezeichneten Verfahrensschritte sichert ein Zerkleinerungs- und Emulgierautomat, welcher so gestaltet ist, daß dem Zubringersystem, am Auslaufteil der Förderschnecken, ein Schneidsystem zugeordnet ist, welches das über die Förderschnecken zugeleitete Gut vorzerkleinert und über weitere Fördersysteme einem zweiten und dritten Schneidsystem, einem Hochdruckschneidsystem, zuführt.

Dem letzten Schneidsystem ist eine Abfüllvorrichtung nachgeschaltet, mittels der das nun fertige Wurstbrät in entsprechende Därme abgefüllt werden kann.

Die zum Einsatz kommenden Schneidsysteme sind als ein- oder auch mehrteilige Schneidsätze ausgeführt, deren Zusammensetzung aus dem Produktionsprozeß abgeleitet bzw. vorgegeben wird.

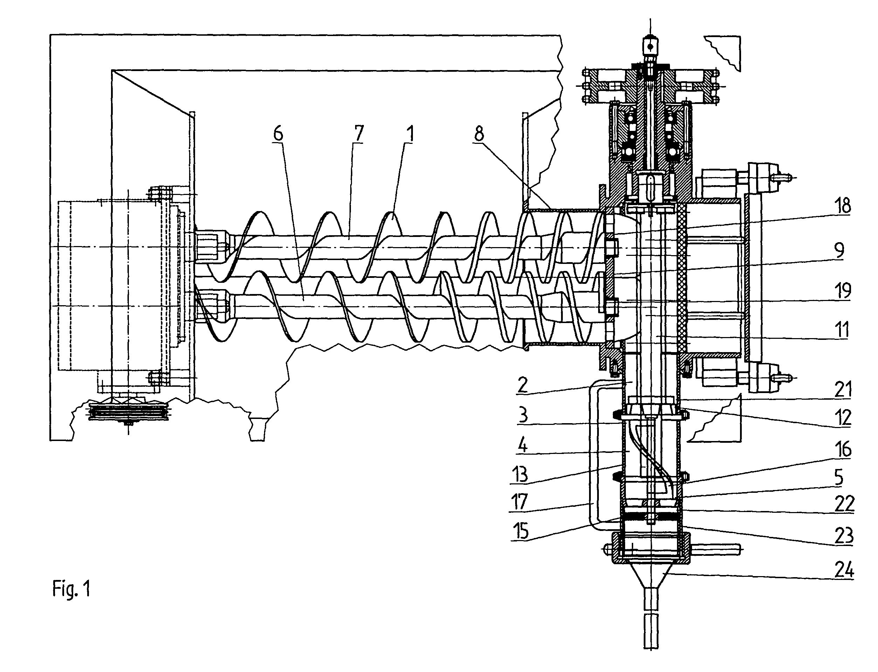

Mit nachfolgendem Ausführungsbeispiel soll die Erfindung näher erläutert werden. Die dazugehörige Zeichnung zeigt
- Figur 1:: den Zerkleinerungs-und Emulgierautomaten in schematischer Darstellung in einer Draufsicht
- Figur 2:: den Zerkleinerungs-und Emulgierautomaten in schematischer Darstellung in einer Seitenansicht

Der vorgestellte Zerkleinerungs- und Emulgierautomat wird geprägt durch die Kombination eines ersten Förder- und Schneidsystems 1, eines nachgeschalteten zweiten Förder- und Schneidsystems 2, einem dritten Schneidsystem 5, welches über einen Mengraum 4 mit dem zweiten Förder- und Schneidsystem 2 verbunden ist.
Diese vier Systeme sind unter Beachtung eines technologischen Flusses in einer Maschine angeorndet, deren technischen Mittel wolftypische Bauteile darstellen, die miteinander kombiniert sind und somit gewährleisten, daß der erfindungsgemäße Zerkleinerungs- und Emulgierautomat nach dem Wolfprinzip arbeitet. MR-Steueorgane, zu einem Prozeß- und Steuerungssystem ausgebildet, steuern und regeln, unter Auswertung prozeßtypischer Fakten den gesamten Produktionsablauf.
Der Antrieb erfolgt in bekannter Weise über Elektromotoren, das komplette Antriebssystem für diesen Automaten wird weiter unten näher beschrieben.

Das erste Förder- und Schneidsystem 1 besteht aus zwei parallel gelagerten und zueinander fördernden Arbeits- und Zubringerschnecken 6, 7, welche in einem Gehäuse 8 derart zueinander gelagert sind, daß das über einen nicht näher dargestellten offenen Trichter auf diese Arbeits- und Zubringerschnecken 6, 7 aufgegebene Wolfgut von diesen erfaßt und durch das Gehäuse 8 bis zu einem nachgeordneten ersten Schneidsatz 9 gefördert wird.
Dieser erste Schneidsatz 9 besteht aus einem Vorschneider 18 und einem Messer 19, welche eine Vorzerkleinerung des Wolfgutes auf Stückgrößen im Bereich von 20 mm bis 120 mm bewirken.
Der Vorschneider 18 ist unmittelbar im Gehäuse 8 drehsicher und das Messer 19 auf den Messerzapfen der Wellen von Arbeits- und Zubringerschnecken 6, 7 drehbar angeordnet.

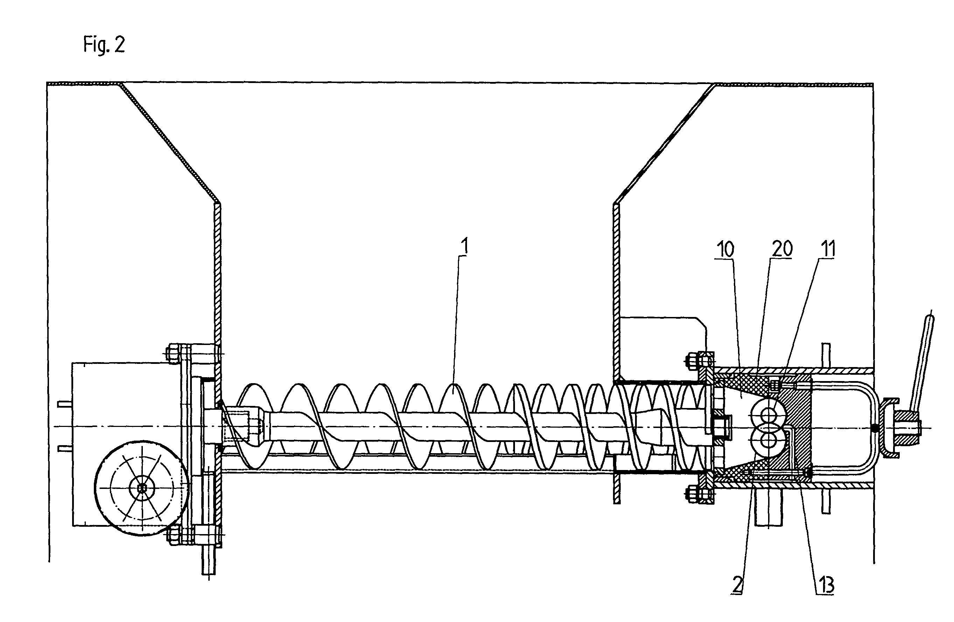

Die Verspannung des ersten Schneidsatzes 9 erfolgt durch ein Druckstück 20, welches unmittelbar auf den ersten Schneidsatz 9 wirkt, diesen gegen die Schnecken 6,7 preßt und so im Zusammenwirken mit dem Gehäuse 8 Schneidbedingungen für den ersten Schneidsatz 9 herstellt (Figur 2). Das Gehäuse 8 ist so gestaltet, daß es, die Schneidbedingungen für den ersten Schneidsatz 9 berücksichtigend, direkt in die Übergabestelle 10 des Rohstoffes zum nachfolgenden System übergeht.

In diesem Bereich Übergabestelle 10 und des Druckstückes 20 ist das zweite Fördersystem 2 für den Rohstoffübernahmebereich angeordnet, wobei die Übergabe des grob zerkleinerten Rohstoffes quer zur Förderrichtung des ersten Fördersystems 1 erfolgt.

Das zweite Förder- und Schneidsystem 2 wird durch die Doppelschneckenpumpen 11 und den zweiten Schneidsatz 12 charakterisiert, wobei die Aufgabe, die Zuführung des grob vorzerkleinerten Wolfgutes auf bzw. zum zweiten Förder- und Schneidsystem 2 unter Vakuum abläuft. Über die Doppelschneckenpumpen 11 wird das Wolfgut ohne zusätzliche Komprimierung zum zweiten Schneidsatz 12 gefördert, welcher gleichzeitig als Gegendrucklager wirkt und somit für einen Durckaufbau, welcher erforderlich ist für ein qualitätsgerechtes Schneiden, sorgt.
Durch das ständig nachfördernde Wolfgut wird vor dem zweiten Schneidsatz 12, in einem zwischen den Doppelschneckenpumpen 11 und dem Schneidsatz 12 vorhandenen Druckraum 21 ein Druck aufgebaut, welcher bis auf einen Betrag von 50 bar ansteigen kann.
Dieser Druckaufbau ist die Garantie dafür, daß das Wolfgut aus dem Gehäuse 13 und den Schneckenpumpen 11 durch diesen zweiten Schneidsatz 12 gedrückt, durch die vorhandenen Schneidsatzteile fein zerkleinert wird und unter Beibehaltung diesen Druckes in einen nachgeschalteten Mengraum 4 gelangt.
In diesem Mengraum 4, in dem ein Druck von bis 50 bar anliegen kann, ist eine als Meng- und Mischarmatur ausgebildetes Mengorgan 16 vorgesehen.
Gleichfalls verfügt der Mengraum 4 über entsprechende Anschlüsse 3, über die die erforderlichen Beimischungen (Wasser und Würzstoffe) in den Mengraum 4 eingeleitet werden können, um mit dem darin befindlichen Wolfgut vermischt und emulgiert zu werden, was durch das im Mengraum 4 vorgesehene Mengorgan 16 positiv unterstützt wird.

Das Mengorgan 16 kann dabei in bevorzugter Weise als z-förmig gestalteter Hebelmenarm oder als Schneckenkörper ausgebildet sein, welcher ein- oder mehrgängig gestaltet ist und welcher in seinen Schneckengängen Druchtrittsöffnungen aufweist, die den Emulgier- und Mengprozeß qualitätsgerecht ablaufen lassen.
Mit einer Korngröße von ca. 3-10 mm tritt das Wolfgut aus dem Mengraum 4 aus und gelangt in den Bereich des dritten Schneidsystems 5, welches aus einem mehrteiligen Schneidsatz, besteht, der bis zu 9-teilig ausgerüstet sein kann und dessen Endlochscheibe 15 die Korngröße des Wurstbräts bestimmt.
Je nach verwendeter Endlochscheibe 15 erfolgt durch diesen im Schneidsystem 5 vorgesehenen Schneidsatz 22 eine Feinzerkleinerung des Wolfgutes bis auf 0,4 mm Korngröße. Konstruktiv ist dieses dritte Schneidsystem 5 so ausgebildet, daß dem Gehäuse 23, in dem der Schneidsatz 22 angeordnet ist, eine Abfülleinrichtung 24 unmittelbar zugeordnet werden kann, mittels der das in diesem Zerkleinerungs- und Emulgierautomaten hergestellte Wurstbrät in entsprechende Därme abgefüllt werden kann.

Ein weiteres wesentliches Merkmal des neuen Zerkleinerungs- und Emulgierautomaten besteht darin, daß das aus dem dritten Schneidsystem 5 austretende Wurstbrät einer nochmaligen Zerkleinerung, einer Vermischung und Emulgierung unterzogen werden kann, indem dieses Wurstbrät über eine Beipaßanlage 17 dem zweiten Förder- und Schneidsystem 2 zugeführt wird, sodann nochmals das zweite Förder- und Schneidsystem 2 und das dritte Schneidsystem 5 durchläuft. Durch die Anordnung dieser Beipaßanlage 17 ist auch sichergestellt, daß das Wurstbrät bei seiner Rückführung bzw. erneuten Zuführung zum zweiten Förder- und Schneidsystem 2 so zugeleitet wird, ohne daß das Wurstbrät nicht mit der Umluft kontaktiert wird.

Die Zuführung von Inkredenzien (Würzstoffen und Wasser) über die Anschlüsse 3 in den Mengraum 4 erfolgt über ein externes Hochdruckdosiersystem, über welches die beizumischenden Elemente dem Mengraum 4 zugeführt werden.

Unmittelbar am Gehäuse und im Gehäuse des Mengraumes 4 sind entsprechende Sensoren vorgesehen, die produktspezifische Daten des Wolfgutes erfassen, diese einem externen Prozeß- und Steuerungssystem zuführen, dort abgeglichen werden, eine Auswertung erfolgt und bei Bedarf dem Hochdruckdosiersystem definitive Befehle zugehen, die unmittelbar Einfluß nehmen auf die Dosiermenge der in den Mengraum 4 zuzuführenden Inkredenzien. Durch die vorhandenen Sensoren werden solche Betriebsdaten wie Temperatur des Wolfgutes, vorherrschender Druck im Mengraum 4, Bindefähigkeit und Zähigkeit des Wolfgutes gemessen, welche Voraussetzung sind für die Zudosierung weiterer Würzstoffe oder auch anderer Beimengungen.

Der Antrieb des gesamten Systems kann beispielsweise über Elektromotore, Hydroantriebe und Magnetfeldantriebe in überlicher Weise realisiert werden, wobei das erste und zweite Fördersystem 1, 2 getrennt mittels zwei externer Motoren oder aber auch in der Kombination über eine Antriebseinheit angetrieben werden können.

Über den Antrieb der Doppelschneckenpumpen 11 ist es möglich, den zweiten und dritten Schneidsatz 12; 22 anzutreiben, was beispielsweise in der Form erfolgen kann, indem die Drehbewegungen unmittelbar von den Wellen der Doppelschneckenpumpe 11 abgenommen werden. Eine weitere Möglichkeit ist, über eine externe Arbeitswelle, die im zweiten Förder-und Schneidsystem 2 gelagert ist, den Antrieb dieser beiden Schneidsätze 12;22 zu realisieren.

Durch die Variationsmöglichkeiten des dritten Schneidsatzes 22, welcher in bevorzugterweise sieben- bis neunteilig ausgeführt werden kann, ist sichergestellt, daß eine Feinstzerkleinerung in diesem Schneidsystem 5 erfolgen kann und durch seine mehrteilige Ausführung sind durch entsprechende Variationen der einzelnen Schneidsatzteile die Voraussetzungen gegeben, daß nach Austritt aus dem dritten Schneidsatz 22 ein Endprodukt vorliegt, welches unmittelbar über eine Fülleinrichtung in Därmen abgefüllt werden kann.

Mit der vorgestellten Lösung wurde ein Automat entwickelt, welcher auf der Grundlage des Wolfprinzips arbeitet und mit dem sichergestellt ist, daß in einer technologischen Linie, über mehrere Verfahrensstufen ein Produkt entsteht, ein Wurstbrät, welches direkt über eine Abfülleinrichtung 24 in entsprechenden Därmen abgefüllt werden kann. Die Kombination einzelner Verfahrens-Prozeßstufen in einem geschlossenen Kreislauf sichert zum einen eine sehr gute Qualität des Endproduktes, da kein Zwischentransport bzw. Umfüllen stattfindet, somit Lufteinschlüsse in das Wurstbrät ausgeschlossen sind, was sich insbesondere auf die Reduzierung der Keimbelastung auswirkt.

Bei Einsatz des vorgestellten Zerkleinerungs- und Emulgierautomaten zur Herstellung von Wurstbrät kann auf den bisher in diesem Prozeß erforderlichen Kutter verzichtet werden, da die Feinstzerkleinerung, was bisher im Kutterprozeß erfolgte, unmittelbar in diesem Automaten abläuft. Dies bedingt erhebliche ökonomische Verbesserungen, was sich im Platzbedarf und auch in der Personalreduzierung sowie in der Einsparung von Energie auswirkt, denn beim bekannten Kutterprozeß ist für diese Feinstzerkleinerung ein Energieaufwand von rund 50 Wh/kg notwendig, welcher im Gegensatz zum neuen Verfahren unter 20 Wh/kg liegt. Durch den Wegfall des Kutterprozesses wird gleichfalls die mikrobiologische Belastung des Wurstbrätes wesentlich gesenkt, da durch die verfahrensbedingten schnellen Bewegungen der rotierenden Kuttermesser keine zusätzliche Wärme in das Wurstbrät eingetragen wird, somit werden die Eiweißketten im Rohstoff nicht mehr gequetscht, dies bedeutet eine wesentliche Senkung der Denaturierung der Eiweißketten, was andererseits das Wasserbindevermögen des Wurstbrätes wesentlich erhöht, da die Eiweißketten erhalten bleiben.

## Patentansprüche

1. Zerkleinerungs- und Emulgierautomat zum Herstellen von Wurstbrät für Rohwurst Dauerware, Kochwurst, Brühwurst und dergleichen, bestehend aus einem ersten und einem zweiten Förder- und Schneidsystem (1;2) sowie einem weiteren Schneidsystem (5), dem unmittelbar eine Abfülleinrichtung (24) zugeordnet ist, wobei zwischen dem zweiten Förder- und Schneidsystem (2) und dem weiteren Schneidsystem (5) ein ein Mengorgan (16) aufnehmender Mengraum (4) vorgesehen ist, die Förder- und Schneidsysteme (1;2) und das weitere Schneidsystem (5) nach dem Wolfprinzip arbeiten und mit wolftypischen Arbeits- und Zubringerschnecken (6;7), Doppelschneckenpumpen (11) und Schneidsätzen (9;12;22) ausgerüstet und unmittelbar in einem Maschinengehäuse gelagert sind, miteinander in Wirkverbindung stehen und das weitere Schneidsystem (5) mit dem zweiten Förder- und Schneidsystem (2) über eine Bypassanlage (17) verbunden ist.

2. Zerkleinerungs- und Emulgierautomat nach Anspruch 1, **dadurch gekennzeichnet, daß**
im Gehäuse (8) des ersten Förder- und Schneidsystems (1) zwei achsparallel gelagerte Arbeits- und Zubringerschnecken (6;7) angeordnet sind, dem ein erster Schneidsatz (9), bestehend aus Vorschneider (18) und Messer (19), derart nachgeordnet ist, daß der Vorschneider (18) fest im Gehäuse (8) gelagert und das bzw. die Messer (19) auf den Messerzapfen der Arbeits- und Zubringerschnecken (6;7) drehsicher angeordnet sind.

3. Zerkleinerungs- und Emulgierautomat nach einem der Ansprüche 1 und 2, **dadurch gekennzeichnet, daß**
das erste Förder- und Schneidsystem (1) über einen Übergabebereich (10) mit dem zweiten Förder- und Schneidsystem (2) verbunden ist, im Gehäuse (13), in Förderrichtung des Wolfgutes verlaufende Doppelschneckenpumpen (11) angeordnet sind, die in einen vor dem zweiten Schneidsatz (12) befindlichen Druckraum (21) münden.

4. Zerkleinerungs- und Emulgierautomat nach einem der Ansprüche 1 bis 3, **dadurch gekennzeichnet, daß**
das Mengorgan (4) über Anschlüsse (3) mit einem Hochdruckdosiersystem zum Eintrag von Inkredenzien, wie Wasser und Wirkstoffe, verbunden ist und im Gehäuse sowie im Inneren des Mengraumes (4) Sensoren vorgesehen, die mit einem Prozeß-und Steuerungssystem kommunizierend gekoppelt sind.

5. Zerkleinerungs- und Emulgierautomat nach einem der Ansprüche 1 bis 4, **dadurch gekennzeichnet, daß**
im Gehäuse (23) des weiteren Schneidsystems (5) ein mehrteiliger, vorzugsweise sieben bis neunteiliger Schneidsatz (22) angeordnet ist, dessen Endlochscheibe (15) Durchgangsöffnungen besitzt, die der gewünschten Korngröße des Endproduktes, dem Wurstbrät, angepaßt sind.

6. Zerkleinerungs- und Emulgierautomat nach einem der Ansprüche 1 bis 5, **dadurch gekennzeichnet, daß**
dem ersten Förder- und Schneidsystem (1) ein offener Trichter zugeordnet ist, über den das großstückige Wolfgut, Fleisch, dem ersten Schneidsatz (9) über die Arbeits-und Zubringerschnecken (6;7) zugeführt und dort einer Grobzerkleinerung unterzogen wird.

7. Zerkleinerungs- und Emulgierautomat nach einem der Ansprüche 1 bis 6, **dadurch gekennzeichnet, daß**
sich der Grobzerkleinerung im ersten Förder- und Schneidsystem (1) zwei weitere Zerkleinerungsprozesse anschließen, die einmal im zweiten Förder- und Schneidsystem (2) und zum anderen im nachgeordneten weiteren Schneidsystem (5) ablaufen.

8. Zerkleinerungs- und Emulgierautomat nach einem der Ansprüche 1 bis 7, **dadurch gekennzeichnet, daß**
das im Mengraum (4) angeordnete Mengorgan (16) als ein ein- oder mehrgängiger Schneckenkörper ausgebildet ist, welcher in seinen Schneckengängen Durchtrittsöffnungen aufweist.

9. Zerkleinerungs- und Emulgierautomat nach Anspruch 2, **dadurch gekennzeichnet, daß**
der Vorschneider (18) als Doppelvorschneider ausgebildet ist.

10. Zerkleinerungs- und Emulgierautomat nach einem der Ansprüche 1 bis 9, **dadurch gekennzeichnet, daß**
der Antrieb des gesamten Automaten über einen Elektromotor oder alternativ zwei miteinander über koppelbare Elektromotoren bzw. über Hydroantriebe oder Magnetfeldantriebe erfolgt und der gesamte Produktionsablauf über ein Prozeß- und Steuerungssystem regel- und steuerbar gestaltet ist.

11. Zerkleinerungs- und Emulgierautomat nach einem der Ansprüche 1 bis 10, **dadurch gekennzeichnet, daß**
ein Antrieb der Schneidsätze (12,22) über eine besonders ausgebildete Antriebswelle erfolgen kann, welche achsfluchtend im zweiten Förder- und Schneidsystem (2) sowie im Gehäuse (23) des weiteren Schneidsystems (5) gelagert ist.

## Claims

1. Comminution and emulsifying automaton for the production of sausage filling for fresh sausages, conserved products, boiling sausage, heated sausage and the similar consisting of a primary and secondary feed and cutter system (1; 2) and a further cutter system (5), to which a feeding machine (24) is directly assigned, whereby between the secondary feed and cutter system (2) and the further cutter system (5) a feed mixing chamber (4) with mixing unit (16) is provided, the feed and cutter systems (1; 2) and the further cutter system (5) function along the principles of mincing machines fitted with typical mincing machine operation and feeder worms (6; 7), double worm pumps (11) and cutter sets (9;12;22), bedded directly in a machine casing, operating in inter-action and the further cutter system (5) being connected with the secondary feed and cutter system (2) via a bypass unit (17).

2. Comminution and emulsifying automaton as in Claim 1, **characterised by**
two parallel axial production and feeder worms (6;7) being arranged in the casing (8) of the primary feed and cutter system (1), whereby a primary cutter set (9), consisting of a rough cutter (18) and knife (19) with post arrangement in such a manner that the rough cutter (18) is permanently embedded in the casing (8) and the knife, the knives respectively (19), are arranged protected from torsion on the knife journals of the operation and feeder worms (6; 7).

3. Comminution and emulsifying automaton as in one of the Claims 1 and 2, **characterised by**:
the primary feed and cutter system (1) being connected via a delivery zone (10) with the secondary feed and cutter system (2), the double-worm pumps (11) being arranged in direction of minced matter feed that run in a pressure chamber (21) upstream to the secondary cutter set (12).

4. Comminution and emulsifying automaton as in one of the Claims 1 to 3, **characterised by**:
the mixing chamber (4) being connected via connections (3) with a high-pressure dosage system to feed ingredients such as water and substances, and sensors being provided in the casing and in the inside of the mixing chamber (4) which are coupled to communicate with a process and control system.

5. Comminution and emulsifying automaton as in one of the Claims 1 to 4, **characterised by**:
a multi-part, preferably seven- to nine-part cutter set (22), being arranged in the casing (23) of the further cutter system (5), of which the end perforation disk (15) has through holes that are adjusted to the desired particle size for the final product.

6. Comminution and emulsifying automaton as in one of the Claims 1 to 5, **characterised by**:
the primary feed and cutter system (1) being assigned to an open hopper over which the rough-cut mincing matter, meat is fed to the primary cutter set (9) via the operation and feeder worms (6;7) where it undergoes rough comminution.

7. Comminution and emulsifying automaton as in one of the Claims 1 to 6, **characterised by**:
the rough comminution in the primary feed and cutter system (1) being followed by two further comminution processes which, on the one hand, are effected in the secondary feed and cutter system (2) and on the other, in the following further cutter system (5).

8. Comminution and emulsifying automaton as in one of the Claims 1 to 7, **characterised by**:
the mixing unit (16) in the mixing chamber (4) being formed as a one- or multi-spiral worm unit provided with penetration openings in the worm spiral.

9. Comminution and emulsifying automaton as in Claim 2, **characterised by**:
the rough cutter (18) being formed as double rough cutter.

10. Comminution and emulsifying automaton as in one of the Claims 1 to 9, **characterised by**:
the drive of the entire automaton being effected via an electric motor or alternatively by two coupled electric motors, via hydro drives respectively, or magnetic field drives and the entire production process being regulated and controlled via a process and control system.

11. Comminution and emulsifying automaton as in one of the Claims 1 to 10, **characterised by**:
a drive of the cutter sets (12; 22) being possible by means of a particularly developed drive shaft which is embedded in a truly aligned axle in the secondary feed and cutter system (2) and in the casing (23) of the further cutter system (5).

## Revendications

1. Machine automatique à concasser et à émulsionner pour la production de chair à saucisse pour saucisse non cuite, comestible de garde, saucisse cuisinée, saucisse à bouillir et apparentées, se composant d'un premier et d'un second système de transport et de coupe (1 ; 2), ainsi que d'un autre système de coupe (5), auquel un dispositif de remplissage (24) est directement adjoint. Une chambre de dosage (4) est prévue, accueillant un dispositif de mesure des masses (16) situé entre le second système de transport et de coupe (2) et l'autre système de coupe (5). Les systèmes de transport et de coupe (1 ; 2), ainsi que l'autre système de coupe (5) fonctionnent selon le principe du hachoir et sont équipés de vis sans fin de fonctionnement et d'alimentation (6 ; 7) caractéristiques du hachoir, de pompes à vis sans fin à deux filets (11) et de jeux de coupe (9 ; 12 ; 22). Ces systèmes sont directement logés dans un boîtier de la machine et interagissent les uns avec les autres. L'autre système de coupe (5) est relié au second système de transport et de coupé (2) par l'intermédiaire d'une installation de dérivation (17).

2. Machine automatique à concasser et à émulsionner selon la revendication 1, **caractérisée en ce que**
deux vis sans fin de fonctionnement et d'alimentation (6 ; 7) logées de façon parallèle à l'axe sont disposées dans le boîtier (8) du premier système de transport et de coupe (1), dont un premier jeu de coupe (9), composé d'une lame dégrossisseuse (18) et d'un couteau (19), est disposé en aval de telle façon que la lame dégrossisseuse (18) est logée de manière fixe dans le boîtier (8) et que la ou les lames (19) sont disposées, protégées contre toute rotation, sur le tenon de lame de la vis sans fin de fonctionnement et d'alimentation (6 ; 7).

3. Machine automatique à concasser et à émulsionner selon l'une des revendications 1 et 2, **caractérisée en ce que**
le premier système de transport et de coupe (1) est relié au second système de transport et de coupe (2) par une zone de transfert (10), que dans le boîtier (3) sont disposées des pompes à vis sans fin à deux filets (11), avec un sens de rotation selon la direction de transport de la substance à hacher, ces pompes débouchant dans une chambre sous pression (21) se trouvant à l'entrée du deuxième jeu de coupe (12).

4. Machine automatique à concasser et à émulsionner selon l'une des revendications 1 à 3, **caractérisée en ce que**
le dispositif de mesure des masses (16) est relié par l'intermédiaire de raccords (3) à un système de dosage à haute pression afin d'incorporer des ingrédients, comme de l'eau ou des substances. Le boîtier et l'intérieur de la chambre de dosage (4) sont pourvus de capteurs qui sont couplés de façon communicante avec un système de processus et de gestion.

5. Machine automatique à concasser et à émulsionner selon l'une des revendications 1 à 4, **caractérisée en ce que**
dans le boîtier (23) de l'autre système de coupe (5) est disposé un jeu de coupe (22) comportant plusieurs pièces, de préférence sept à neuf pièces, dont le disque perforé d'extrémité (15) possède des diamètres intérieurs adaptés au calibre souhaité pour le produit final, c'est-à-dire à la chair à saucisse.

6. Machine automatique à concasser et à émulsionner selon l'une des revendications 1 à 5, **caractérisée en ce que**
une trémie ouverte est adjointe au premier système de transport et de coupe (1), au travers de laquelle la substance à hacher, c'est-à-dire la viande, est conduite sous forme de gros morceaux jusqu'au premier jeu de coupe (9) par l'intermédiaire des vis sans fin de fonctionnement et d'alimentation (6 ; 7) et y subit alors un concassage primaire.

7. Machine automatique à concasser et à émulsionner selon l'une des revendications 1 à 6, **caractérisée en ce que**
deux autres processus de concassage succèdent au concassage primaire qui a eu lieu dans le système de transport et de coupe (1). Ces deux processus se déroulent une première fois dans le second système de transport et de coupe (2), puis dans l'autre système de coupe (5) placé en aval.

8. Machine automatique à concasser et à émulsionner selon l'une des revendications 1 à 7, **caractérisée en ce que**
le dispositif de mesure des masses (16) qui se trouve dans la chambre de dosage (4) a la forme d'un corps à vis sans fin à un filet ou à filetage multiple, lequel présente des ouvertures de passage dans ses spires.

9. Machine automatique à concasser et à émulsionner selon la revendication 2, **caractérisée en ce que**
la lame dégrossisseuse (18) se présente sous la forme d'une lame dégrossisseuse.

10. Machine automatique à concasser et à émulsionner selon l'une des revendications 1 à 9, **caractérisée en ce que**
l'entraînement de l'ensemble de la machine automatique se fait par l'intermédiaire d'un moteur électrique ou, alternativement, par deux moteurs électriques qui peuvent être couplés, ou par des commandes hydrauliques ou encore par des commandes à champ magnétique. L'ensemble du déroulement de la production peut être réglé et contrôlé par un système de processus et de gestion.

11. Machine automatique à concasser et à émulsionner selon l'une des revendications 1 à 10, **caractérisée en ce que**
un entraînement des jeux de coupe (12 ; 22) peut avoir lieu par l'intermédiaire d'un arbre de transmission de conception spéciale, lequel est logé dans l'alignement de l'axe dans le second système de transport et de coupe (2), ainsi que dans le boîtier (23) de l'autre système de coupe (5).
